# FASCICULE DE BREVET EUROPEEN

(11) **EP 0 689 649 B1**
(45) Date de publication et mention de la délivrance du brevet: **27.08.1997**
(21) Numéro de dépôt: 95907698.5
(22) Date de dépôt: 26.01.1995
(51) Int. Cl.: F16F 15/12

(54) **DISPOSITIF AMORTISSEUR DE TORSION, NOTAMMENT POUR VEHICULE AUTOMOBILE**
TORSIONSSCHWINGUNGSDÄMFER, INSBESONDERE FÜR KRAFTFAHRZEUGE
TORSION DAMPER DEVICE, PARTICULARLY FOR MOTOR VEHICLES

(30) Priorité: 26.01.1994 FR 9400839
(43) Date de publication de la demande: 03.01.1996
(73) Titulaire: VALEO, 75017 Paris (FR)
(72) Inventeur: DUCLOS, Didier, F-77330 Ozoir-la-Ferrière (FR)
(74) Mandataire: Gamonal, Didier
(86) Numéro de dépôt international: FR9500081
(87) Numéro de publication internationale: WO9520728

(56) Documents cités:
- DE-A- 3 418 671
- DE-A- 3 627 784
- FR-A- 2 601 103
- PATENT ABSTRACTS OF JAPAN vol. 10, no. 146 (M-482) (2203) 28 Mai 1986 & JP,A,61 002 920 (DAIKIN SEISAKUSHO K.K.)
- PATENT ABSTRACTS OF JAPAN vol. 17, no. 139 (M-1385) 22 Mars 1993 & JP,A,04 316 745 (ATSUGI UNISIA CORP.)

## Description

L'invention concerne les dispositifs amortisseurs de torsion, et, notamment, ceux intervenant dans les véhicules automobiles pour filtrer les vibrations entre l'arbre de sortie du moteur et l'arbre d'entrée de la boîte de vitesses.

Ces dispositifs amortisseurs de torsion équipent par exemple l'embrayage, et/ou le volant lorsqu'il s'agit d'un volant divisé alors communément dit double volant amortisseur.

Ils comportent, globalement, deux parties coaxiales, l'une primaire, l'autre secondaire, qui sont montées rotatives l'une par rapport à l'autre à l'encontre de moyens élastiques à action circonférentielle et de moyens de frottement sensibles à la force centrifuge, et qui forment masses lorsqu'il s'agit d'un double volant amortisseur. Un tel dispositif est connu du document FR-A-2 553 848.

Au démarrage et à l'arrêt du moteur, il intervient une phase délicate, parce que, les vibrations à filtrer variant de fréquence, soit qu'elles montent en fréquence comme cela est le cas au démarrage soit qu'elles baissent comme cela est le cas à l'arrêt, elles passent inévitablement par la fréquence propre de résonance du véhicule, si, comme il est usuel, celle-ci se situe en dessous du régime minimal possible en mouvement.

Si le franchissement de cette fréquence de résonance n'est pas assuré rapidement, il peut en résulter des à-coups difficilement admissibles.

Pour surmonter cette difficulté, il a été proposé, dans le document FR-A-2 553 848 (figure 3), de verrouiller temporairement l'une sur l'autre les deux parties coaxiales, à l'aide d'un organe intervenant par exemple à la manière d'un patin de friction formant une masse d'inertie sensible à la force centrifuge.

Un tel verrouillage est difficile à contrôler, notamment en ce qui concerne le guidage des organes qui l'assurent, et il conduit donc inévitablement à une complication sensible de l'ensemble.

En outre, les organes mis en oeuvre risquent de se coincer.

L'invention a pour objet un dispositif amortisseur de torsion exempt de ces inconvénients et présentant en outre d'autres avantages.

Ce dispositif amortisseur de torsion, qui peut aussi bien convenir à un embrayage qu'à un double volant amortisseur, est du genre comportant deux parties coaxiales, l'une primaire, l'autre secondaire, montées rotatives l'une par rapport à l'autre à l'encontre de moyens élastiques à action circonférentielle et de moyens de frottement sensibles à la force centrifuge, et est d'une manière générale caractérisé en ce que les moyens de frottement comportent au moins une lamelle qui, portée par l'une des parties coaxiales, s'étend en oblique par rapport à l'axe de l'ensemble et porte par sa tranche contre l'autre des parties coaxiales, et qui, sur sa face tournée du côté opposé à l'axe de l'ensemble, est soumise à un organe de modulation sensible à la force centrifuge.

Ainsi, le verrouillage susceptible d'intervenir au démarrage et à l'arrêt se fait avantageusement par frottement.

Il n'y a dès lors aucun risque de coincement d'un quelconque organe.

En outre, l'ensemble se satisfait avantageusement d'une réalisation particulièrement simple.

Par exemple, l'organe de modulation sensible à la force centrifuge peut très simplement être un ressort, éventuellement lesté d'au moins une masselotte, qui s'étend annulairement autour de l'axe de l'ensemble, et qui est élastiquement déformable radialement.

Préférentiellement, la lamelle mise en oeuvre s'étend elle-même circulairement de manière continue autour de l'axe de l'ensemble à la manière d'une rondelle.

Ainsi, dans le cas où l'une des deux parties coaxiales définit une chambre dans laquelle sont établis les moyens élastiques tandis que l'autre comporte un voile qui, pour l'intervention de ces moyens élastiques, s'étend radialement dans cette chambre, cette lamelle peut avantageusement être mise à profit pour fermer intérieurement à étanchéité cette chambre à son niveau.

Il est ainsi avantageusement tiré un parti supplémentaire de cette lamelle.

Dans ce cas, il y a une telle lamelle d'un côté au moins du voile, et, préférentiellement, de chaque côté de celui-ci.

Les caractéristiques et avantages de l'invention ressortiront d'ailleurs de la description qui va suivre, à titre d'exemple, en référence aux dessins schématiques annexés sur lesquels :
- la figure 1 est une vue partielle en coupe axiale d'un dispositif amortisseur de torsion suivant l'invention ;
- la figure 2 reprend, à échelle supérieure, le détail de la figure 1 repéré par un encart II sur cette figure 1 ;
- la figure 3 est, à l'échelle de la figure 2, une vue en coupe transversale du dispositif amortisseur de torsion suivant l'invention, suivant la ligne III-III de la figure 2.

Ces figures illustrent, à titre d'exemple, l'application de l'invention à un double volant amortisseur 10, pour véhicule automobile.

Ce double volant amortisseur 10, qui constitue par lui-même un dispositif amortisseur de torsion, comporte deux parties coaxiales 11A, 11B, l'une primaire, l'autre secondaire, formant masses et montées rotatives l'une par rapport à l'autre à l'encontre de moyens élastiques 12 à action circonférentielle et de moyens de frottement 13, détaillés ultérieurement.

La partie coaxiale 11A primaire comporte, ici un boîtier 14 définissant, annulairement, une chambre 15 dans laquelle sont établis les moyens élastiques 12.

Cette chambre est remplie au moins partiellement d'un agent pâteux ou visqueux, tel que de la graisse, pour lubrifier les moyens élastiques 12.

Ici, le boîtier 14 est formé, d'une part, d'un plateau 16, qui s'étend transversalement et présente, à sa périphérie externe, parallèlement à l'axe A de l'ensemble, un rebord 18, et, d'autre part, d'un couvercle 19, qui, solidaire du boîtier 14, en étant rapporté sur le rebord 18, en bout de celui-ci, par exemple par des vis non représentées, s'étend transversalement, parallèlement au plateau 16, sur une partie seulement de la hauteur radiale de celui-ci.

Ici, le couvercle 19 comporte, successivement, un tronçon transversal 20, par lequel il est appliqué à la tranche du rebord 18, un tronçon axial 21, par lequel il est appliqué à la surface interne de ce rebord 18, et un tronçon transversal 22, qui s'étend en direction de l'axe A de l'ensemble.

Un joint d'étanchéité 24 est prévu entre le couvercle 19 et le rebord 18, dans l'angle que forment le tronçon transversal 20 et le tronçon axial 21 du couvercle 19.

A sa périphérie interne, le boîtier 14 étanche est solidaire en rotation d'un moyeu 25 qui, ici, forme une pièce distincte de son plateau 16.

Pour la fixation de l'ensemble à un arbre menant non représenté, en l'espèce l'arbre de sortie, ou vilebrequin, du moteur, le moyeu 25 et le plateau 16 présentent, circulairement, de place en place, en correspondance l'un avec l'autre, des perçages 27 propres au passage de vis 28.

A sa périphérie externe, le boîtier 14 porte, extérieurement au raccordement entre le plateau 16 et son rebord 18, une couronne de démarreur 30.

La partie coaxiale 11B secondaire comporte, elle aussi, parallèlement au plateau 16 de la partie coaxiale 11A primaire, à distance de celui-ci, un plateau 31, et celui-ci est destiné à former le plateau de réaction d'un embrayage à friction non représenté, suivant des dispositions connues du type de celles décrites par exemple dans le document FR-A-2 553 848 (US-A-4,638,684).

Le plateau 31 offre donc, une face de friction pour le disque de friction de l'embrayage à friction. Cette face de friction est tournée à l'opposé du plateau 16.

Par sa périphérie interne, le plateau 31 est centré sur le moyeu 25 de la partie coaxiale 11A primaire, par l'intermédiaire, ici, d'un roulement à billes 32.

En variante, ce roulement à billes 32 peut par exemple être remplacé par palier lisse.

A sa périphérie externe, le plateau 31 présente un rebord 34, qui, comme le rebord 18 du plateau 16 de la partie coaxiale 11A primaire, s'étend parallèlement à l'axe A de l'ensemble, et qui, ici, présente, circulairement, de place en place, des perçages taraudés 35, pour la fixation du mécanisme d'embrayage associé, plus précisément du couvercle que comporte celui-ci.

La partie coaxiale 11B secondaire comporte, également, un voile 36, qui, pour l'intervention des moyens élastiques 12, s'étend radicalement dans la chambre 15, entre les plateaux 16 et 31.

Ici, ce voile 36 est fixé par des vis 37 au plateau 31 à la périphérie interne de celui-ci et sert à caler axialement la bague externe du roulement à billes 32.

Ici, les moyens élastiques 12 comportent des organes élastiques 38 répartis circulairement de place en place autour de l'axe A de l'ensemble.

Ici, ils comportent chacun, d'une part, un premier ressort 38', du type ressort à boudin, et, d'autre part, disposé coaxialement à l'intérieur de ce ressort 38', un deuxième ressort 38'. également du type ressort à boudin.

Pour l'intervention des organes élastiques 38, le voile 36 comporte à sa périphérie externe, circulairement, de place en place, des évidements 39 dans chacun desquels s'étend circonférentiellement, avec ou sans jeu, un tel organe élastique 38.

Ici, ces évidements 39 sont des encoches ouvertes radialement à la périphérie externe du voile 36, et, conjointement, entre chaque organe élastique 38 et le rebord 18 du boîtier 14, s'étend radialement, pour éviter qu'un tel organe élastique 38 ne frotte sur ce rebord 18, un patin 40, en variante une pièce annulaire en forme de goulotte.

Ainsi la chambre 15 est délimitée en majeur partie par la masse coaxiale 11A, et le voile 36 présente à sa périphérie externe des bras délimités par les évidements 39 et pénétrant dans ladite chambre 15.

Pour l'intervention des moyens élastiques 12, le boîtier 14 de la partie coaxiale 11A primaire porte, circulairement, de place en place, axialement en saillie dans la chambre 15, tant sur le plateau 16 que sur le couvercle 19, en correspondance l'un à l'autre de ce plateau 16 à ce couvercle 19, des plots 42 avec lesquels les organes élastiques 38 peuvent coopérer par leurs extrémités circonférentielles.

Les moyens de frottement 13 comportent, ici, un disque 43, qui, muni d'une garniture de frottement 44 sur chacune de ses faces, s'étend annulairement autour de l'axe A de l'ensemble au voisinage du moyeu 25, au contact du plateau 16, et qui, calé en rotation sur le voile 36 à sa périphérie externe, est soumis à une rondelle élastique à action axiale 46, ici d'allure globalement tronconique, qui, par l'intermédiaire d'une rondelle entretoise 47, calée en rotation sur le moyeu 25, le maintient en permanence appliquer contre le plateau 16.

Plus précisément, la rondelle 46 prend appui sur un épaulement du moyeu 25. Le voile 36 présente à sa périphérie externe un prolongement doté d'échancrures dans lesquelles pénètrent des rivets 45 solidaires du voile 36. Ainsi, des moyens d'engrènement, éventuellement à jeu, sont prévus entre le voile 36 et le disque 43 pour calage en rotation, éventuellement après rattrapage d'un jeu, du disque 43 sur la deuxième masse 11B.

La rondelle 47 présente à sa périphérie interne de pattes pénétrant dans des rainures du moyeu 25 pour son calage en rotation de ladite rondelle.

Lors du mouvement relatif entre les deux parties coaxiales 11A, 11B les ressorts 38', 38" sont comprimés et les garnitures 44 sont admises à frotter respectivement contre le plateau 16 et la rondelle 47.

Les dispositions qui précèdent sont bien connues par elles-mêmes, et elles ne seront donc pas décrites plus en détail ici.

Suivant l'invention, les moyens de frottement 13 comportent, également, au moins une lamelle 50, qui, portée par l'une des parties coaxiales 11A, 11B, s'étend en oblique par rapport à l'axe A de l'ensemble et porte par sa tranche 51 contre l'autre des parties coaxiales 11A, 11B, et qui, sur sa face 52 tournée du côté opposé à l'axe A de l'ensemble, est soumise à un organe de modulation 53 sensible à la force centrifuge.

Ici, la lamelle 50 s'étend de manière circulairement continue autour de l'axe A de l'ensemble à la manière d'une rondelle.

Préférentiellement, elle est calée sur la partie coaxiale 11A, 11B qui la porte, tant radialement que circonférentiellement.

Ici, la lamelle 50 est portée par la partie coaxiale 11B secondaire et, plus précisément, par le voile 36 que comporte celle-ci, et, par sa tranche, elle porte sur la partie coaxiale 11A primaire, et, plus précisément, sur le plateau 16 que comporte celle-ci.

Ici, la lamelle 50 appartient à une pièce 55, qui est en forme générale de cage annulaire légèrement ouverte, et dans laquelle intervient l'organe de modulation 53.

Cette pièce 55 s'étend radialement de l'une à l'autre de deux portées cylindriques 56, 57 du voile 36, et, donc, de la partie coaxiale 11B secondaire, entre les évidements 39 du voile 36 et la périphérie interne de celui-ci.

Outre la lamelle 50, la pièce 55 comporte, ici, d'un seul tenant, un tronçon 60, qui s'étend axialement à compter de la périphérie interne de la lamelle 50, jusqu'à prendre appui sur la portée cylindrique 56 du voile 36, un tronçon 61 qui s'étend transversalement au contact du voile 36, et un tronçon 62, qui s'étend globalement axialement au contact de la portée cylindrique 57 ici inclinée du voile 36.

La portée 57 favorise une retenue axiale de la pièce 55.

Par les tronçons 60, 62, la pièce 55, et donc la lamelle 50, sont calées radialement sur le voile 36.

Par le tronçon 61 elles peuvent être calées circonférentiellement de manière positive sur celui-ci, par exemple par collage.

Mais, le plus souvent le seul frottement entre le tronçon 61 et le voile 36 suffit au maintien circonférentiel de la pièce 55, et, donc, de la lamelle 50, par rapport au voile 36.

Ici, la tranche 51 de la lamelle 50 par laquelle celle-ci porte sur le plateau 16 de la partie coaxiale 11A primaire est biseautée par un chanfrein 63.

Il résulte de ce qui précède qu'il y a une lamelle 50 d'un côté au moins du voile 36.

A son niveau, et suivant l'invention, cette lamelle 50 ferme intérieurement à étanchéité la chambre 15, qui, ainsi, peut contenir de la graisse pour la lubrification des organes élastiques 38.

Ici, il y a une lamelle 50 de part et d'autre du voile 36, et les pièces 55 correspondantes sont dos à dos de part et d'autre de celui-ci.

Une des lamelles 50 s'étend ainsi entre le voile 36 et le plateau 16 de la partie coaxiale 11A primaire, et l'autre des lamelles 50 s'étend entre ce voile 36 et le couvercle 19 correspondant.

Les pièces 55, et, donc, les lamelles 50, peuvent par exemple être réalisées en matière synthétique ou en métal.

On appréciera qu'il est aisé de réaliser un sous-ensemble pièces 55 à lamelles 50 - voile 36. Les pièces 55 se montent ainsi par encliquetage chacune dans une creusure du voile délimitée par les tronçons 61, 56, 57.

Ici, l'organe de modulation 53 associé à une lamelle 50 comporte un ressort 64, qui s'étend annulairement autour de l'axe A de l'ensemble, et qui est élastiquement déformable radialement.

Par exemple, et tel que représenté, ce ressort 64 est du type ressort à boudin.

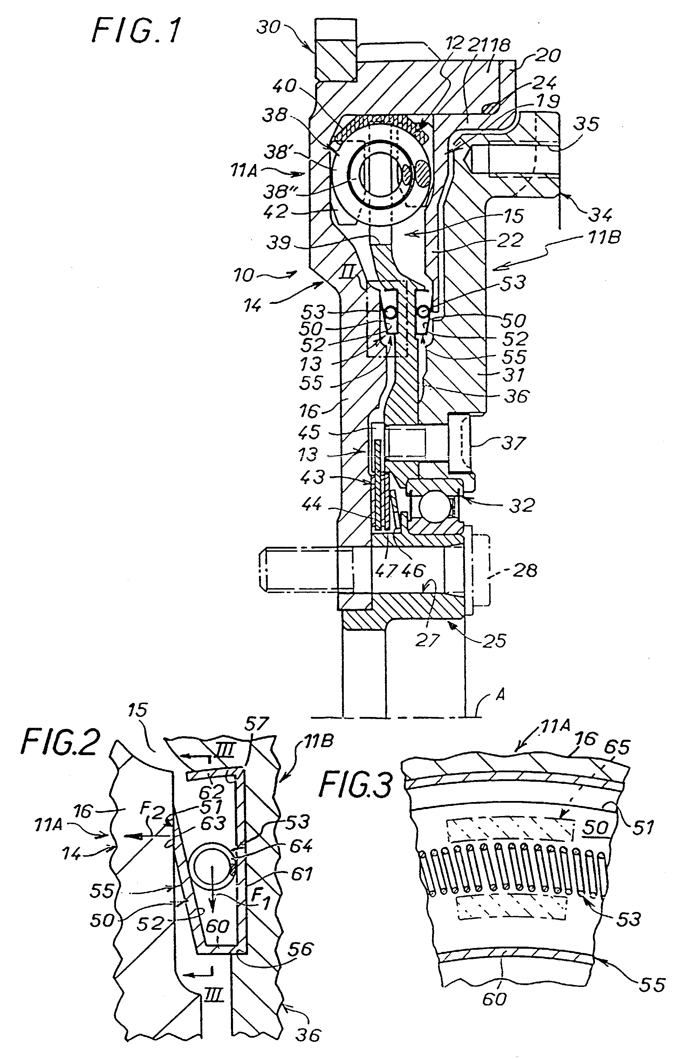

Si désiré, et tel que schématisé en traits interrompus sur la figure 3, il peut être lesté localement d'au moins une masselotte 65.

Par exemple, cette masselotte 65 peut être une. douille engagée par son alésage central sur le ressort 64.

Préférentiellement, plusieurs masselottes 65 sont prévues, en étant régulièrement réparties circulairement autour de l'axe A de l'ensemble.

Au repos, le ressort 64 est sous précontrainte, et la sollicitation dont il est l'objet tend à réduire son rayon, tel que schématisé par la flèche F1 sur la figure 2.

Il applique donc fermement la lamelle 50 contre le plateau 16 de la partie coaxiale 11A primaire, suivant la flèche F2 de la figure 2.

En service, et sous les effets de la force centrifuge, le rayon du ressort 64 tend à augmenter, ce qui soulage d'autant la lamelle 50.

Le couple de frottement dont celle-ci est à l'origine tend alors à diminuer.

Autrement dit, ce couple de frottement est maximal au repos, et, donc, au démarrage et à l'arrêt du moteur.

Bien entendu, la présente invention ne se limite pas à la forme de réalisation décrite et représentée, mais englobe toute variante d'exécution.

En particulier, au lieu de s'étendre circulairement de manière continue à la manière d'une rondelle, la lamelle mise en oeuvre suivant l'invention peut n'intervenir que localement, tout se passant par exemple comme si la rondelle correspondante se trouvait fractionnée circulairement en une ou plusieurs lamelles.

En outre, le domaine d'application de l'invention n 'est pas limité à celui des seuls doubles volants amortisseurs, mais s'étend au contraire à n'importe quels autres dispositifs amortisseurs de torsion, et, par exemple, à ceux équipant certains au moins des embrayages.

Bien entendu, le moyeu 25 peut être d'un seul tenant avec le plateau 16, l'épaulement d'appui pour la rondelle 46 étant alors formé par exemple à la faveur d'un circlips.

Les vis 28 peuvent être implantées au-dessus du roulement 32. Dans ce cas, il faut prévoir des passages dans le plateau 21, par exemple en alternance avec les vis 37, pour accès aux têtes des vis 28.

Le couvercle 19 peut être rapporté de manière étanche par soudage ou sertissage sur le rebord 18 et définir un canal annulaire avec plateau 16 pour les ressorts à boudin 38', 38".

## Revendications

1. Dispositif amortisseur de torsion du genre comportant deux parties coaxiales (11A, 11B), l'une primaire, l'autre secondaire, montées rotatives l'une par rapport à l'autre à l'encontre de moyens élastiques (12) à action circonférentielle et de moyens de frottement (13) sensibles à la force centrifuge, caractérisé en ce que les moyens de frottement (13) comportent au moins une lamelle (50), qui, portée par l'une des parties coaxiales (11A, 11B), s'étend en oblique par rapport à l'axe (A) de l'ensemble et porte par sa tranche (51) contre l'autre des parties coaxiales (11A, 11B), et qui, sur sa face (52) tournée du côté opposé à l'axe (A) de l'ensemble, est soumise à un organe de modulation (53) sensible à la force centrifuge.

2. Dispositif amortisseur de torsion suivant la revendication 1, caractérisé en ce que la lamelle (50) est calée sur la partie coaxiale (11A, 11B) qui la porte, tant radialement que circonférentiellement.

3. Dispositif amortisseur de torsion suivant la revendication 1 ou 2, caractérisé en ce que la tranche (51) de la lamelle (50) par laquelle celle-ci porte sur une partie coaxiale (11A, 11B) est biseautée par un chanfrein (63).

4. Dispositif amortisseur de torsion suivant l'une quelconque des revendications 1 à 3, caractérisé en ce que l'organe de modulation (53) comporte un ressort (64), qui s'étend annulairement autour de l'axe (A) de l'ensemble, et qui est élastiquement déformable radialement.

5. Dispositif amortisseur de torsion suivant la revendication 4, caractérisé en ce que le ressort (64) est du type ressort à boudin.

6. Dispositif amortisseur de torsion suivant la revendication 4, caractérisé en ce que le ressort (64) est lesté d'au moins une masselotte (65).

7. Dispositif amortisseur de torsion suivant la revendication 4, caractérisé en ce que, au repos, le ressort (64) est sous précontrainte, et la sollicitation dont il est l'objet tend à en réduire le rayon.

8. Dispositif amortisseur de torsion suivant la revendication 1, caractérisé en ce que la lamelle (50) s'étend de manière circulairement continue autour de l'axe (A) de l'ensemble à la manière d'une rondelle.

9. Dispositif amortisseur de torsion suivant la revendication 8, caractérisé en ce que la lamelle (50) appartient à une pièce (55) en forme générale de cage annulaire dans laquelle intervient l'organe de modulation (53).

10. Dispositif amortisseur de torsion suivant la revendication 9, caractérisé en ce que la pièce (55) s'étend radialement de l'une à l'autre de deux portées cylindriques (56, 57) de la partie coaxiale (11B) concernée.

11. Dispositif amortisseur de torsion suivant la revendication 8, caractérisé en ce que, l'une des parties coaxiales (11A, 11B) définissant une chambre (15) dans laquelle sont établis les moyens élastiques (12) tandis que l'autre des parties coaxiales (11A, 11B) comporte un voile (36) qui, pour l'intervention desdits moyens élastiques (12), s'étend radialement dans ladite chambre (15), il y a une lamelle (50) d'un côté au moins du voile (36), et, à son niveau, cette lamelle (50) ferme intérieurement à étanchéité la chambre (15).

12. Dispositif amortisseur de torsion suivant la revendication 11, caractérisé en ce qu'il y a une lamelle (50) de part et d'autre du voile (36).

13. Dispositif amortisseur de torsion suivant la revendication 12, caractérisé en ce que, les lamelles (50) appartenant chacune respectivement à des pièces (55) en forme de cage annulaire, ces pièces (55) sont dos à dos de part et d'autre du voile (36).

14. Dispositif amortisseur de torsion suivant la revendication 12, caractérisé en ce que, la partie coaxiale (11A) qui définit une chambre (15) comportant un boîtier (14) formé d'un plateau (16) présentant à sa périphérie externe un rebord (18), et un couvercle (19) solidaire du boîtier (14), une lamelle (50) s'étend entre le voile (36) et le plateau (16) et une autre entre le viole (36) et le couvercle (19).

## Patentansprüche

1. Torsionsschwingungsdämpfer, umfassend zwei koaxiale Teile (11A, 11B), einen primären und einen sekundären Teil, die im Verhältnis zueinander drehbar entgegen umfangsmäßig wirksamen elastischen Mitteln (12) und fliehkraftempfindlichen Reibungsmitteln (13) gelagert sind , **dadurch gekennzeichnet**, daß die Reibungsmittel (13) mindestens eine Lamelle (50) umfassen, die an einem der koaxialen Teile (11A, 11B) angebracht ist und sich schräg im Verhältnis zur Achse (A) der Einheit erstreckt, wobei sie mit ihrer Kante (51) an dem anderen der koaxialen Teile (11A, 11B) aufliegt, und auf die, auf ihrer Fläche (52), die entgegengesetzt zur Achse (A) der Einheit gerichtet ist, ein fliehkraftempfindliches Regelorgan (53) einwirkt.

2. Torsionsschwingungsdämpfer nach Anspruch 1 , **dadurch gekennzeichnet,** daß die Lamelle (50) an dem koaxialen Teil (11A, 11B), der sie trägt, sowohl radial als auch umfangsmäßig gesichert ist.

3. Torsionsschwingungsdämpfer nach Anspruch 1 oder 2, **dadurch gekennzeichnet,** daß die Kante (51) der Lamelle (50), mit der diese auf einem koaxialen Teil (11A, 11B) aufliegt, mit einer Abschrägung (63) versehen ist.

4. Torsionsschwingungsdämpfer nach einem der Ansprüche 1 bis 3 , **dadurch gekennzeichnet,** daß das Regelorgan (53) eine Feder (64) umfaßt, die sich ringförmig um die Achse (A) der Einheit erstreckt und die radial elastisch verformbar ist.

5. Torsionsschwingungsdämpfer nach Anspruch 4 , **dadurch gekennzeichnet**, daß die Feder (64) als Schraubenfeder ausgeführt ist.

6. Torsionsschwingungsdämpfer nach Anspruch 4 , **dadurch gekennzeichnet**, daß die Feder (64) durch mindestens ein Fliehgewicht (65) belastet ist.

7. Torsionsschwingungsdämpfer nach Anspruch 4 , **dadurch gekennzeichnet,** daß die Feder (64) im Ruhezustand vorgespannt ist und daß die auf sie einwirkende Beaufschlagung ihren Radius tendenziell verkleinert.

8. Torsionsschwingungsdämpfer nach Anspruch 1 , **dadurch gekennzeichnet,** daß sich die Lamelle (50) kreisförmig durchgehend um die Achse (A) der Einheit in der Art einer Scheibe erstreckt.

9. Torsionsschwingungsdämpfer nach Anspruch 8 , **dadurch gekennzeichnet,** daß die Lamelle (50) zu einem Teil (55) mit der allgemeinen Form eines ringförmigen Käfigs gehört, in dem das Regelorgan (53) wirksam ist.

10. Torsionsschwingungsdämpfer nach Anspruch 9, **dadurch gekennzeichnet,** daß sich das Teil (55) radial zwischen zwei zylindrischen Auflageflächen (56, 57) des betreffenden koaxialen Teils (11B) erstreckt.

11. Torsionsschwingungsdämpfer nach Anspruch 8, **dadurch gekennzeichnet**, daß einer der koaxialen Teile (11A, 11B) eine Kammer (15) begrenzt, in dem die elastischen Mittel (12) ausgebildet sind, während der andere der koaxialen Teile (11A, 11B) eine Zwischenscheibe (36) umfaßt, die sich zum Wirksamwerden der besagten elastischen Mittel (12) radial in die besagte Kammer (15) erstreckt, wobei eine Lamelle (50) zumindest auf einer Seite der Zwischenscheibe (36) vorgesehen ist und diese Lamelle (50) auf ihrer Höhe die Kammer (15) innen dicht verschließt.

12. Torsionsschwingungsdämpfer nach Anspruch 11, **dadurch gekennzeichnet**, daß eine Lamelle (50) auf beiden Seiten der Zwischenscheibe (36) vorgesehen ist.

13. Torsionsschwingungsdämpfer nach Anspruch 12, **dadurch gekennzeichnet,** daß die Lamellen (50) jeweils zu Teilen (55) in Form eines ringförmigen Käfigs gehören, wobei diese Teile (55) beiderseits der Zwischenscheibe (36) aneinander anliegen.

14. Torsionsschwingungsdämpfer nach Anspruch 12, **dadurch gekennzeichnet,** daß der koaxiale Teil (11A), der eine Kammer (15) begrenzt, ein Gehäuse (14), das aus einer Platte (16) besteht, die an ihrem Außenrand eine Randleiste (18) aufweist, und einen fest mit dem Gehäuse (14) verbundenen Dekkel (19) umfaßt, wobei sich eine Lamelle (50) zwischen der Zwischenscheibe (36) und der Platte (36) und eine andere zwischen der Zwischenscheibe (36) und dem Deckel (19) erstreckt.

## Claims

1. Torsion damping device of the kind having two coaxial parts (11A, 11B), one primary, the other secondary, which are mounted for rotation of one with respect to the other counter to the action of circumferentially acting elastic means (12) and friction means (13) sensitive to centrifugal force, characterised in that the friction means (13) comprise at least one blade (50) which, being carried by one of the coaxial parts (11A, 11B), extends obliquely with respect to the axis (A) of the assembly and bears through its edge (51) against the other one of the coaxial parts (11A, 11B), and which is subjected, on its face (52) turned away from the axis (A) of the assembly, to the action of a modulating member (53) which is sensitive to centrifugal force.

2. Torsion damping device according to Claim 1, characterised in that the blade (50) is fixed both radially and circumferentially on the coaxial part (11A, 11B) which carries it.

3. Torsion damping device according to Claim 1 or 2, characterised in that the edge (51) of the blade (50) through which the latter bears on a coaxial part (11A, 11B) is bevelled by means of a chamfer (63).

4. Torsion damping device according to any one of Claims 1 to 3, characterised in that the modulating member (53) has a spring (64) which extends in an annular manner around the axis (A) of the assembly, and which is elastically deformable in the radial direction.

5. Torsion damping device according to Claim 4, characterised in that the spring (64) is of the coil spring type.

6. Torsion damping device according to Claim 4, characterised in that the spring (64) is ballasted with at least one weight (65).

7. Torsion damping device according to Claim 4, characterised in that, at rest, the spring (64) is prestressed, and the forces to which it is subjected tend to reduce its radius.

8. Torsion damping device according to Claim 1, characterised in that the blade (50) extends continuously in a circle around the axis (A) of the assembly like a washer.

9. Torsion damping device according to Claim 8, characterised in that the blade (50) is part of a piece (55) having the general form of an annular cage, in which the modulating member (53) acts.

10. Torsion damping device according to Claim 9, characterised in that the piece (55) extends radially from one to the other of two cylindrical surfaces (56, 57) of the coaxial part (llB) concerned.

11. Torsion damping device according to Claim 8, characterised in that, with one of the coaxial parts (11A, 11B) defining a chamber (15) in which the elastic means (12) are disposed, while the other one of the coaxial parts (11A, 11B) has a plate (36) which, for the action of the said elastic means (12), extends radially into the said chamber (15), there is a blade (50) on at least one side of the plate (36), and the said blade (50) sealingly closes the interior of the chamber (15) at the level of that blade.

12. Torsion damping device according to Claim 11, characterised in that there is a blade (50) on each side of the plate (36).

13. Torsion damping device according to Claim 12, characterised in that, with the blades (50) each being part respectively of pieces (55) in the form of an annular cage, the said pieces (55) are back to back on either side of the plate (36).

14. Torsion damping device according to Claim 12, characterised in that, the coaxial part (11A) which defines a chamber (15) having a housing (14) formed by a face-plate (16) having a flange (18) at its outer periphery, and a cover (19) fixed to the housing (14), a blade (50) extends between the plate (36) and the face-plate (16) and another one extends between the plate (36) and the cover (19).
